# EUROPÄISCHE PATENTANMELDUNG

(11) **EP 1 816 383 A1**
(43) Veröffentlichungstag der Anmeldung: **08.08.2007**
(21) Anmeldenummer: 06002332.2
(22) Anmeldetag: 06.02.2006
(51) Int. Cl.: F16L 19/10

(54) **Trockengeschmierte Rohrverschraubung**

(71) Anmelder: KULM HOLDING AG, 8355 Aadorf (CH)
(72) Erfinder: Westermann, Pirmin, 8303 Bassersdorf (CH); Burger, Michael, 8500 Frauenfeld (CH)
(74) Vertreter: Blum, Rudolf Emil

(57) **Zusammenfassung**

Eine Rohranschlussverbindung (1) hat ein Grundteil (4), eine auf das Grundteil (4) schraubbare Anschlussmutter (2) und einen Klemmring (8), der beim Anziehen der Anschlussmutter (2) auf das Grundteil (4) auf ein Endteil des Rohres (10) verpresst wird. Die Anschlussmutter (2) ist mindestens in einem ersten Kontaktbereich mit Molybdändisulfid beschichtet, und der Klemmring (8) ist mindestens in einem zweiten Kontaktbereich mit Zinn beschichtet.

## Beschreibung

### Hintergrund

Die hier beschriebenen Ausführungsbeispiele der Erfindung betreffen allgemein das Gebiet der Rohrleitungstechnik. Die Ausführungsbeispiele betreffen insbesondere eine Rohrverbindung zum Anschluss eines Rohres an ein Anschlussteil.

### Stand der Technik

Rohrverbindungen (auch Rohrverschraubungen oder Rohranschlussvorrichtungen genannt) dienen hauptsächlich zur Verbindung von Rohren mit glatten Enden. Eine bekannte Rohrverbindung ist eine Schneidringverschraubung nach DIN 2353. Bei dieser Rohrverschraubung presst eine Überwurfmutter einen keilförmigen Schneidring beim Anziehen in einen Innenkegel eines Verschraubungsstutzens. Der Schneidring wird dadurch ringförmig auf das Rohr gepresst, so dass die Schneidkante des Schneidringes in das Rohr einschneidet.

Eine weitere bekannte Rohrverbindung ist die SERTO Klemmringverschraubung, die einen radialen Ein- und Ausbau erlaubt. Diese Klemmringverschraubung ist prinzipiell aus CH 351807, CH 356964, CH 379 855 und CH 456 268 bekannt. Beim Anziehen einer Überwurfmutter auf ein Grundteil wird ein Klemmring auf ein Endteil eines Rohres verpresst. Der Klemmring verformt sich beim Anziehen der Mutter und schnürt das Rohr ohne Einkerbung (Verletzung der Rohroberfläche) ein. Die Verformungskräfte erzeugen im Bereich der Einschnürung und an der Stossstelle "Klemmring/Grundteil" grosse Flächenpressungen, die das sichere Halten der Rohre und die einwandfreie metallische Dichtung gewährleisten.

An Rohrleitungen in Sauber- oder Reinräumen, beispielsweise auf dem Gebiet der Entwicklung und Produktion von pharmazeutischen Produkten oder Halbleitern, werden an die Verbindungstechnik hohe Anforderungen gestellt. Dort dürfen beispielsweise keine Materialien verwendet werden, die einen störenden Einfluss auf einen Produktionsprozess haben könnten, beispielsweise verursacht durch Verunreinigungen (z.B. Ausgasen der Grundmaterialien oder Beschichtungen oder Abrieb bei Kontaktflächen von Kunststoffen, Schmiermitteln, oder der Komponenten, oder Abrieb durch festgefressene Gewinde). Rohrverbindungen müssen auch nach wiederholtem Montieren die geforderten Dichtheiten aufweisen, ohne dass mit Materialabrieb verbundene oder sonstige Verschleisserscheinungen (z.B. durch sogenanntes Fressen) auftreten.

Im Stand der Technik bestehen für diese Anforderungen unterschiedliche Lösungsansätze. Normierte Schneidringverschraubungen erzeugen allein schon wegen dem notwendigen Schneidvorgang erhöhten Abrieb und/oder Späne. Ausserdem können sie nicht radial ausgebaut werden, da das Rohr in das Grundteil ragt. Eine Schweissverbindung ist zwar eine bewährte Verbindungsart, sie ist aber keine Option für Anwendungen, die eine wiederholte Montierbarkeit erfordern, oder bei denen beispielsweise Kunststoff- und Metallteile miteinander zu verbinden sind. Bisher musste die SERTO Klemmringverschraubung für Anwendungen im Sauberbereich mit Spezialschmierstoffen geschmiert werden, welche Abrieb erzeugen und zur Verunreinigung des Systems führen können. Zur sogenannten Trockenschmierung wird bisher Silber als Schmiermittel eingesetzt. In der Halbleiterindustrie kann dieses Material jedoch nicht in allen Fällen verwendet werden, da Silber den Prozess stören oder gar verunmöglichen würde.

### Darstellung der Erfindung

Es stellt sich daher die Aufgabe, eine Rohrverbindung zu schaffen, die die genannten Anforderungen erfüllt. Um dies zu schaffen, ist die hier an Hand von Ausführungsbeispielen beschriebene Rohranschlussvorrichtung mit einer Art Trockenschmierung ausgestattet.

Ein Aspekt der Erfindung betrifft daher eine Rohranschlussvorrichtung mit einem Grundteil, einer auf das Grundteil schraubbaren Anschlussmutter und einem Klemmring, der beim Anziehen der Anschlussmutter an das Grundteil gepresst und auf ein Endteil des Rohres verpresst wird. Die Anschlussmutter ist mindestens in einem ersten Kontaktbereich mit Molybdändisulfid beschichtet, und der Klemmring ist mindestens in einem zweiten Kontaktbereich mit Zinn beschichtet.

Ein weiterer Aspekt der Erfindung betrifft eine Rohranschlussvorrichtung, bei der zusätzlich ein Ring zwischen dem Grundteil und dem Klemmring vorhanden ist. Gemäss diesem Aspekt ist die Anschlussmutter mindestens in zwei Kontaktbereichen mit Molybdändisulfid beschichtet.

### Kurze Beschreibung der Zeichnungen

Weitere Ausgestaltungen, Vorteile, neue Eigenschaften und Anwendungen der Erfindung ergeben sich aus der folgenden detaillierten Beschreibung unter Einbezug der Zeichnungen. In den Zeichnungen haben gleiche Elemente die gleichen Bezugszeichen. In den Zeichnungen zeigen:
Figur 1 einen schematischen Längsschnitt durch ein Ausführungsbeispiel einer Rohrverschraubung, und
Figur 2 einen schematischen Längsschnitt durch ein weiteres Ausführungsbeispiel einer Rohrverschraubung.

### Detaillierte Beschreibung einiger Ausführungsbeispiele

Die detaillierte Beschreibung einiger Ausführungsbeispiele erfolgt an Hand einer Rohrverschraubung, insbesondere einer SERTO Rohrverschraubung. Für den Fachmann ist allerdings ersichtlich, dass eine solche Rohrverschraubung nur ein ausgewähltes Beispiel einer Vorrichtung zum Verbinden eines Rohres ist. Andere Vorrichtungen zum Verbinden eines Rohres können Schneidringverschraubungen, Flanschverbindungen und Bördelverbindungen sein. Demnach ist die vorliegende Beschreibung der Erfindung nicht auf SERTO Rohrverschraubungen beschränkt, sondern ist allgemein für jegliche Rohrverschraubungen geeignet, die üblicherweise geschmiert werden, um das Anfressen der Gewinde zu verhindern (Tribokorrosion), die Anzugsmomente zu minimieren und unerwünschten Abrieb zu vermeiden.

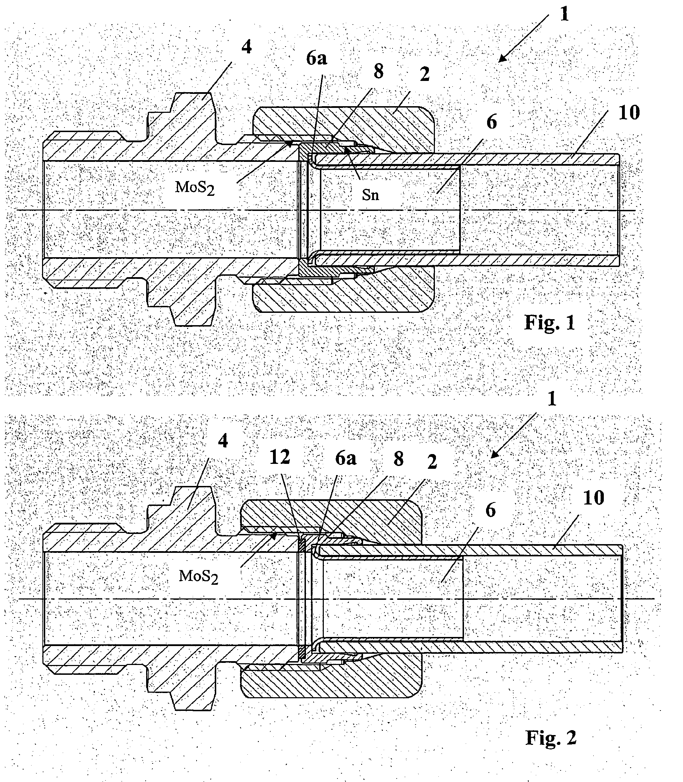

Figur 1 zeigt einen schematischen Längsschnitt durch ein Ausführungsbeispiels einer an ein Rohr 10 montierten Rohrverschraubung 1. Die Rohrverschraubung 1 hat eine Anschlussmutter 2, ein Grundteil 4, eine Stützhülse 6 und einen Klemmring 8. Die Stützhülse 6 hat einen Durchmesser, der in etwa einem Innendurchmesser des Rohres 10 entspricht, und einen gekrümmten Randabschnitt 6a mit einem grösseren Durchmesser. Die Stützhülse 6 steckt damit im wesentlichen im Innern des Rohres 10, wobei der Randabschnitt 6a verhindert, dass die Stützhülse 6 in das Rohr 10 rutscht.

Beim Anziehen der Anschlussmutter 2 auf das Grundteil 4 wird der Klemmring 8 auf ein Rohrende des Rohres 10 verpresst. Der Klemmring 8 verformt sich beim Anziehen der Anschlussmutter 2 und schnürt das Rohr 10 ein, ohne die Rohroberfläche zu verletzen. Die Verformungskräfte erzeugen im Bereich der Einschnürung und zwischen dem Klemmring 8 und dem Grundteil 4 hohe Flächenpressungen, die das sichere Halten des Rohres 10 und die einwandfreie metallische Dichtung zwischen dem Grundteil 4 und Klemmring 8 sowie zwischen dem Klemmring 8 und dem Rohr 10 gewährleisten.

In einem Ausführungsbeispiel sind die Anschlussmutter 2 und der Klemmring 8 mindestens in Bereichen, in denen sich die Anschlussmutter 2 und der Klemmring 8 berühren (Kontaktbereiche), so ausgestaltet, dass die oben genannten Anforderungen (z.B. kein Materialabrieb, kein Ausgasen oder Abrieb von Kunststoffen oder Schmiermitteln und Dichtheit auch nach wiederholtem Montieren) erfüllt werden. Gemäss einem Ausführungsbeispiel ist die Anschlussmutter 2 mit Molybdändisulfid (MoS₂) und der Klemmring 8 mit Zinn (Sn) beschichtet. Zur Veranschaulichung sind in Figur 1 die Beschichtungen mit MoS₂ und Sn angedeutet. Durch eine solche Beschichtung wird eine neuartige Kombination und System von einer Trockenschmierung erzielt.

Die Anschlussmutter 2 ist beispielsweise aus Edelstahl. Mit Hilfe eines bekannten Verfahrens (z.B. Trommelverfahren) wird sie mit MoS₂ beschichtet. Die Dicke der MoS₂ Schicht beträgt in einem Ausführungsbeispiel etwa 3-10 µm. Je nach Anwendungsgebiet kann die derart beschichtete Anschlussmutter 2 nachbearbeitet werden (z.B. durch eine zusätzliche Strahlbehandlung), um eine MoS₂ Schicht mit einer möglichst homogenen und glatten Oberfläche zu erzielen. Die Glätte der MoS₂ Schicht wird auch durch die Oberfläche der unbeschichteten Anschlussmutter 2 bestimmt. Die Anschlussmutter 2 kann deshalb vorbehandelt werden, um die Oberfläche zu glätten, und die Haftwirkung zwischen dem zu beschichtenden Teil und dem Substrat zu verbessern, beispielsweise durch Sandstrahlen.

Der Klemmring 8 kann in einem Ausführungsbeispiel ebenfalls aus Edelstahl sein. Mit Hilfe eines bekannten galvanischen Verfahrens wird der Klemmring 8 mit Zinn beschichtet. Die Dicke der Zinn Schicht beträgt in einem Ausführungsbeispiel etwa 5-10 µm.

In einem anderen Ausführungsbeispiel kann auch das Grundteil 4 beschichtet sein, beispielsweise mit einer Zinn-Nickel (Sn-Ni) Legierung. Dies kann in einem spezifischen Fall notwendig sein, bei dem das Grundteil 4 in einem Gegenkörper (Manifold) eingeschraubt werden soll, ohne zusätzlich geschmiert zu werden (z.B. Einschraubnippel mit O-Ring oder Dichtkante). In einer Ausführung besteht die Legierung aus etwa 63% Zinn und etwa 37% Nickel. Mit Hilfe eines galvanischen Verfahrens wird diese Legierung mit einer Dicke von etwa 1-10 µm auf das Grundteil 4 aus Edelstahl aufgebracht. Um die Haftung dieser Schicht zu verbessern, kann vor dem Aufbringen der Legierungsschicht eine Schicht Nickel mit einer Dicke von etwa 1-5 µm aufgebracht werden.

Die beschichteten Teile Anschlussmutter 2, Klemmring 8 und evtl. Grundteil 4 können jeweils allseitig (komplett) beschichtet sein. Alternativ dazu können jeweils nur die Kontaktbereiche der einzelnen Komponenten beschichtet werden, die mit einem der anderen Teile in Kontakt kommen und an denen Abrieb entstehen kann. Fertigungstechnisch ist jedoch die allseitige Beschichtung einfacher und wird deshalb bevorzugt.

Figur 2 zeigt einen schematischen Längsschnitt durch ein weiteres Ausführungsbeispiel einer Rohrverschraubung 1. Im Gegensatz zu der in Figur 1 gezeigten Rohrverschraubung 1, die ausschliesslich metallisch dichtend funktioniert, hat die in Figur 2 gezeigte Rohrverschraubung 1 zusätzlich zu den in Figur 1 gezeigten und oben beschriebenen Teilen einen Ring 12. Dieser Ring 12 hat eine geringere Härte als das Grundteil 4 und der Klemmring 8. Der Ring 12 befindet sich zwischen einer Stirnfläche des Grundteils 4 und einer Stirnfläche des Klemmringes 8. Der Ring 12 ist in einem Ausführungsbeispiel in der Dichtfläche des Klemmrings 8 eingelassen und kann bei einer Demontage nicht verloren werden. Der Ring kann entweder eingepresst, verleimt oder falls aus Kunststoff, direkt eingespritzt werden. Beim Anziehen der Anschlussmutter 2 drücken das Grundteil 4 und der Klemmring 8 auf den Ring 12 und sorgen damit für die geforderte Dichtheit der Rohrverschraubung 1. Dank der geringeren Härte des Rings 12 wird dieser bei genügend hoher Flächenpressung deformiert und kann sich optimal an die Dichtfläche des Grundteils 4 anpassen. Selbst bei einer ungenügenden Qualität der Dichtfläche oder bei einer Verletzung dieser, ist diese Verbindung dank dem Ring 12 dicht zu bekommen. Der Ring 8 kann aus Kunststoff sein, beispielsweise aus PEEK (Polyetheretherketone) oder PEI (Polyetherimid). Er kann aber auch aus einem weicheren Metall sein.

In einem Ausführungsbeispiel der in Figur 2 gezeigten Rohrverbindung 1 ist nur die Anschlussmutter 2 beschichtet, beispielsweise mit MoS₂. Die Beschichtung mit MoS₂ und evtl. Vor- und Nachbearbeitungen erfolgen wie oben beschrieben. Da der Klemmring 8 wegen des Ringes 12 nicht direkt mit dem Grundteil 4 in Berührung kommt, braucht der Klemmring 8 nicht beschichtet werden.

In einem weiteren Ausführungsbeispiel der in Figur 2 gezeigten Rohrverbindung 1 ist zusätzlich das Grundteil 4, wie oben beschrieben, mit einer Zinn/Nickel Legierung beschichtet. In diesem Ausführungsbeispiel sind demnach die Anschlussmutter 2 und das Grundteil 4 beschichtet. Der Klemmring 8 ist nicht beschichtet.

Die vorgehend beschriebenen Ausführungsbeispiele einer Rohrverbindung sind mit einer Trockenschmierung ausgestattet, die ohne jeglichen Einsatz von Schmiermitteln auskommt und die oben genannten Anforderungen erfüllt. Die beschriebenen Ausführungen der Rohrverbindung sind beispielsweise bis 30 mal wiederholt montierbar, ohne dass Abrieb oder Anfressen auftritt oder die Dichtheit der Verschraubung darunter leidet.

## Patentansprüche

1. Rohranschlussvorrichtung (1) für ein Rohr (10), mit einem Grundteil (4), einer auf das Grundteil (4) schraubbaren Anschlussmutter (2) und einem Klemmring (8), der beim Anziehen der Anschlussmutter (2) an das Grundteil (4) gepresst und auf ein Endteil des Rohres (10) verpresst wird, **dadurch gekennzeichnet, dass** die Anschlussmutter (2) mindestens in einem ersten Kontaktbereich mit Molybdändisulfid beschichtet ist, und dass der Klemmring (8) mindestens in einem zweiten Kontaktbereich mit Zinn beschichtet ist.

2. Die Vorrichtung nach Anspruch 1, bei der das Molybdändisulfid eine Schichtdicke von etwa 5-10 µm hat.

3. Die Vorrichtung nach Anspruch 1 oder 2, bei der das Zinn eine Schichtdicke von etwa 5-10 µm hat.

4. Die Vorrichtung nach einem der vorhergehenden Ansprüche, bei der das Grundteil (4) mit einer Zinn-Nickel-Legierung beschichtet ist.

5. Die Vorrichtung nach Anspruch 4, bei der die Zinn-Nickel-Legierung eine Schichtdicke von etwa 1-10 µm hat.

6. Vorrichtung (1) zum Verbinden von Rohren (10), mit einem Grundteil (4), einer auf das Grundteil (4) schraubbaren Anschlussmutter (2), einem Ring (12) und einem Klemmring (8), der beim Anziehen der Anschlussmutter (2) an das Grundteil (4) gepresst und auf ein Endteil des Rohres (10) verpresst wird und den Ring (12) gegen eine Stirnseite des Grundteils (4) presst, **dadurch gekennzeichnet, dass** die Anschlussmutter (2) mindestens in einem Kontaktbereich mit Molybdändisulfid beschichtet ist.

7. Die Vorrichtung nach Anspruch 6, bei der das Grundteil (4) mit einer Zinn-Nickel-Legierung beschichtet ist.

8. Die Vorrichtung nach Anspruch 7, bei der die Zinn-Nickel-Legierung eine Schichtdicke von etwa 1-10 µm hat.

9. Die Vorrichtung nach einem der Ansprüche 6 bis 8, bei der das Molybdändisulfid eine Schichtdicke von etwa 1-10 µm hat.

10. Die Vorrichtung (1) nach einem der Ansprüche 6 bis 9, bei der der Ring (12) aus Kunststoff ist.
